# EUROPEAN PATENT APPLICATION

(11) **EP 2 784 613 A2**
(43) Date of publication of application: **01.10.2014**
(21) Application number: 14157429.3
(22) Date of filing: 03.03.2014
(51) Int. Cl.: G05B 19/418

(54) **Manufacturing system**

(30) Priority: 14.03.2013 JP 2013052051
(71) Applicant: Kabushiki Kaisha Yaskawa Denki, Kitakyushu-shi, Fukuoka 806-0004 (JP)
(72) Inventor: Tsutsumi, Ryosuke, Kitakyushu-shi, Fukuoka 806-0004 (JP); Okawa, Ken, Kitakyushu-shi, Fukuoka 806-0004 (JP); Harada, Toshiyuki, Kitakyushu-shi, Fukuoka 806-0004 (JP); Shiota, Akihiro, Kitakyushu-shi, Fukuoka 806-0004 (JP); Matsufuji, Kenji, Kitakyushu-shi, Fukuoka 806-0004 (JP)
(74) Representative: Viering, Jentschura & Partner Patent- und Rechtsanwälte

(57) **Abstract**

A manufacturing system (1) includes: a plurality of processing devices (30) capable of outputting processing information including a processing detail performed to a work (W); a processing tool (40) capable of outputting backup information including a processing detail performed to the work; and a management device (20) configured to create management information by associating the processing information and the backup information with identification information identifying the work.

## Description

### CROSS-REFERENCE TO RELATED APPLICATION

This application claims priority from Japanese Patent Application No. 2013-52051 filed with the Japan Patent Office on March 14, 2013, the entire content of which is hereby incorporated by reference.

### BACKGROUND

### 1. Technical Field

The present disclosure relates to a manufacturing system.

### 2. Related Art

In manufacturing systems, use of robots allows for the automated assembly operation. The manufacturing system that uses such robots is disclosed in JP-A No. 2003-62727. In the manufacturing system disclosed in this publication, the assembly operation of a work is carried out by the worker and the robot. Further, in the manufacturing system, for example, when there is an error in the assembly operation by the robot, the worker may carry out the repairing operation of the work.

In such manufacturing system, there is a case where the worker and the like other than the robot carries out the assembly operation as seen in the case where the worker carries out the repairing operation due to the error in the assembly operation by the robot. Also in such the case, the assembly state of the work is managed in the manufacturing system.

Therefore, one of the purposes of the present disclosure is to provide a manufacturing system that is able to properly manage the assembly state of the work.

### SUMMARY

A manufacturing system according to one aspect of the present disclosure includes: a plurality of processing devices capable of outputting processing information including a processing detail performed to a work; a processing tool capable of outputting backup information including a processing detail performed to the work; and a management device configured create management information by associating the processing information and the backup information with identification information identifying the work.

### BRIEF DESCRIPTION OF DRAWINGS

FIG. 1 is a diagram illustrating a general configuration of a manufacturing system according to one embodiment.
FIG. 2 is a block diagram illustrating a functional configuration of a robot controller illustrated in FIG. 1.
FIG. 3 is a block diagram illustrating a functional configuration of a management device illustrated in FIG. 1.
FIG. 4 is a flowchart illustrating a flow of the assembly operation.
FIG. 5 is a flowchart illustrating a flow of the process for a case where an assembly operation is restarted after a repairing operation.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A manufacturing system according to one aspect of the present disclosure includes: a plurality of processing devices capable of outputting processing information including a processing detail performed to a work; a processing tool capable of outputting backup information including a processing detail performed to the work; and a management device configured create management information by associating the processing information and the backup information with identification information identifying the work.

This manufacturing system allows for the proper management of the assembly state of the work.

One embodiment of the present disclosure will be described with reference to the drawings. It is noted that, in the drawings and their descriptions, the elements common to each other are provided with the same reference numeral and the duplicated description will be omitted.

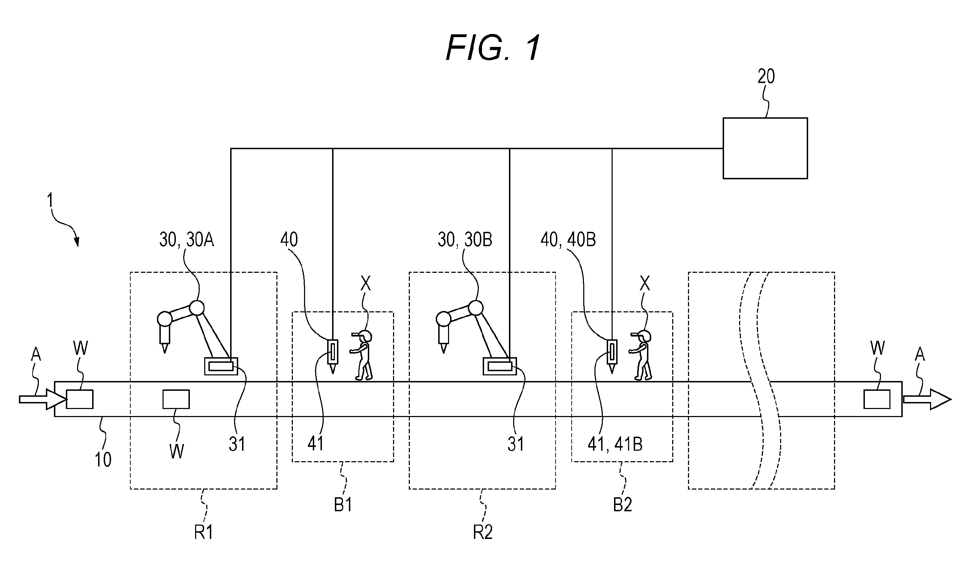

As illustrated in FIG. 1, a manufacturing system 1 includes a conveyance device 10, a management device 20, a plurality of robots (processing device) 30, and a plurality of nut runners (processing tool) 40. The conveyance device 10 conveys a work W that is to be assembled. In FIG. 1, the work W is conveyed by the conveyance device 10 along the direction of the arrow A. The robots 30 and the nut runners 40 perform the assembly operation to the work W conveyed by the conveyance device 10.

The plurality of the robots 30 are provided along the extending direction of the conveyance device 10. An example of the robot 30 may include a robot having an arm for the assembly operation. It is noted that, in the following description, the plurality of robots 30 will be represented as a robot 30A, a robot 30B, ... in this order from the upstream of the conveying direction of the work W when they need to be distinguished to each other (in FIG. 1, the robot 30A and the robot 30B only are depicted out of multiple robots 30).

The robot 30A performs the assembly operation to the work W conveyed in a robot operation area R1. It is noted that the robot operation area R1 is an area in which the robot 30A performs the assembly operation. The robot 30B performs the assembly operation to the work W conveyed in a robot operation area R2. It is noted that the robot operation area R2 is an area in which the robot 30B performs the assembly operation. Other robots 30 perform the assembly operation to the work W conveyed in the robot operation areas allocated to respective robots 30.

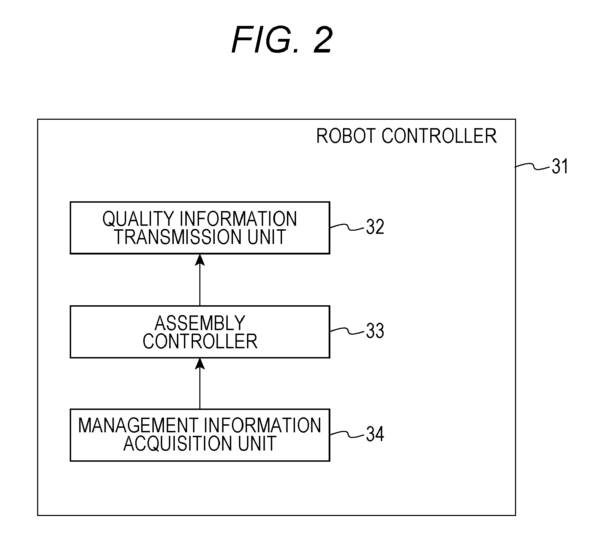

Each of the robots 30 is equipped with a robot controller 31. The robot controller 31 controls the assembly operation performed by the robot 30. More specifically, as illustrated in FIG. 2, the robot controller 31 includes a quality information transmission unit 32, an assembly controller 33, and a management information acquisition unit 34. Before the robot 30 performs the assembly operation to the work W, the management information acquisition unit 34 acquires, from the management device 20, management information for the work W to be operated. The management information is obtained by that the identification information of the work W and the information including the assembly detail for each assembly operation performed to the work W are associated to each other. Further, the information including the assembly detail for each assembly operation includes quality information (processing information) indicating the quality of the operation (processing) detail performed by the robot 30 and backup information indicating the quality of the operation (processing) detail performed with the use of the nut runner 40.

The assembly controller 33 controls the arm and the like provided to the robot 30 so as to perform the assembly operation to the work W. Further, the assembly controller 33 refers to the management information acquired by the management information acquisition unit 34 before starting the assembly operation to the work W. When the management information includes the quality information or the backup information for the assembly operation process that is to be performed prior to the current assembly operation process, the assembly controller 33 then starts the assembly operation. That is, when the management information for the previous assembly operation process does not include the quality information and the backup information, the assembly controller 33 does not execute any assembly operation.

Further, in the manufacturing system 1, after the repairing operation to the work W is performed with the use of the nut runner 40, the assembly operation is again performed using the robot 30. Therefore, the assembly controller 33 restarts the assembly operation by the robot 30, after the repairing operation with the use of the nut runner 40 is performed. At this time, the assembly controller 33 determines whether or not the assembly operation with the use of the nut runner 40 satisfies a predetermined condition. When the predetermined condition is satisfied, the assembly controller 33 starts the assembly operation to the work W by the robot 30.

More specifically, the assembly controller 33 restarts the assembly operation with the use of the robot 30, after the repairing operation to the work W is performed with the use of the nut runner 40. Prior to the assembly operation with the use of the robot 30, the assembly controller 33 refers to the management information acquired by the management information acquisition unit 34. The assembly controller 33 then determines whether or not the operation detail for the immediately previous operation process satisfies the predetermined condition based on the backup information indicating the operation detail performed with the use of the nut runner 40. The case where the operation detail does not satisfy the predetermined condition refers to, for example, the case where the tightening torque of the screw by the nut runner 40 is insufficient and so on.

The quality information transmission unit 32 transmits the quality information to the management device 20. The quality information includes the operation details of the assembly operation performed by the robot 30 to the work W. The quality information may include, for example, a torque value of the screw tightening when the robot 30 performs the screw tightening operation, an application amount when it applies sealing agent or grease to the work W, for example. The quality information can be electrically obtained from a control value when the assembly controller 33 controls the robot 30 or, alternatively, an actual value measured using a sensor.

The nut runner 40 performs the screw tightening in the assembly operation to the work W. The nut runner 40 is operated by a worker X. The case where the worker X performs the assembly operation of the work W with the use of the nut runner 40 may include, for example, the case where the worker X performs the repairing operation (backup operation) by using the nut runner 40 due to the occurrence of an error in the assembly operation by the robot 30.

Each of the nut runners 40 is provided with a nut runner controller 41, respectively. The nut runner controller 41 transmits a torque value indicating the detail of the screw tightening performed with the use of the nut runner 40 as the backup information to the management device 20. As such, the nut runner 40 (or the management device 20) is able to electrically manage the operation details performed by the nut runner 40 to the work W.

There are backup areas provided between the robots 30, respectively. The worker X performs the repairing operation to the work W by using the nut runner 40 within the backup area. It is noted that the backup area provided between the robot operation area R1 and the robot operation area R2 is represented by a backup area B1. Also, the backup area provided in the downstream side of the robot operation area R2 in the conveying direction of the work W is represented by a backup area B2.

Further, out of the plurality of nut runners 40, the nut runner 40 used within the backup area B2 at the repairing operation is represented as a nut runner 40B. Furthermore, out of the nut runner controllers 41, the nut runner controller 41 which is provided to the nut runner 40B is represented as a nut runner controller 41B.

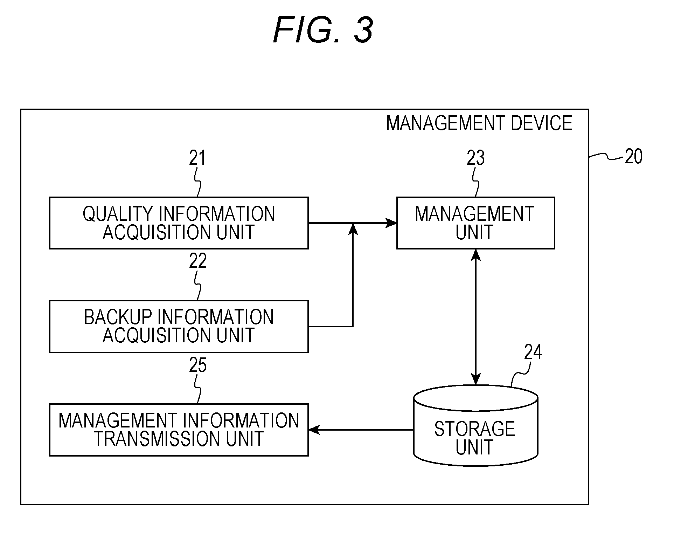

The management device 20 creates management information by associating the identification information of the work W with the quality information indicating the operation detail performed by the robot 30 and the backup information indicating the operation detail performed with the use of the nut runner 40. The manager (worker) is able to know the assembly state of the work W by checking this management information. In details, as illustrated in FIG. 3, the management device 20 includes a quality information acquisition unit 21, a backup information acquisition unit 22, a management unit 23, a storage unit 24, and a management information transmission unit 25.

The quality information acquisition unit 21 acquires the quality information transmitted from the quality information transmission unit 32 of the robot controller 31. The backup information acquisition unit 22 acquires the backup information transmitted from the nut runner controller 41. The management unit 23 creates management information by associating the identification information of the work W with the quality information acquired by the quality information acquisition unit 21 and the backup information acquired by the backup information acquisition unit 22. The management unit 23 stores the created management information in the storage unit 24. Thereby, created is the management information in which the quality information or the backup information indicating the operation detail for each assembly operation is associated with each identification information of the work W. Further, as the assembly operation of the work W proceeds, the quality information or the backup information is sequentially added to the identification information of the work W for each operation process.

The storage unit 24 stores the management information created by the management unit 23. The management information transmission unit 25 transmits the management information stored in the storage unit 24 in response to the request from the management information acquisition unit 34 of the robot controller 31 and the nut runner controller 41 of the nut runner 40.

Next, the flow of the process when the robot 30 performs the assembly operation will be described. Described here will be the case where the robot 30B performs the assembly operation. Further, it is assumed that, when an error occurs in the assembly operation by the robot 30B, the worker X performs the repairing operation by using the nut runner 40B within the backup area B2. As an example, described here will be the flow of the process when the robot 30B and the nut runner 40B are used. The similar process will be performed for the case where other robot 30 and nut runner 40 are used.

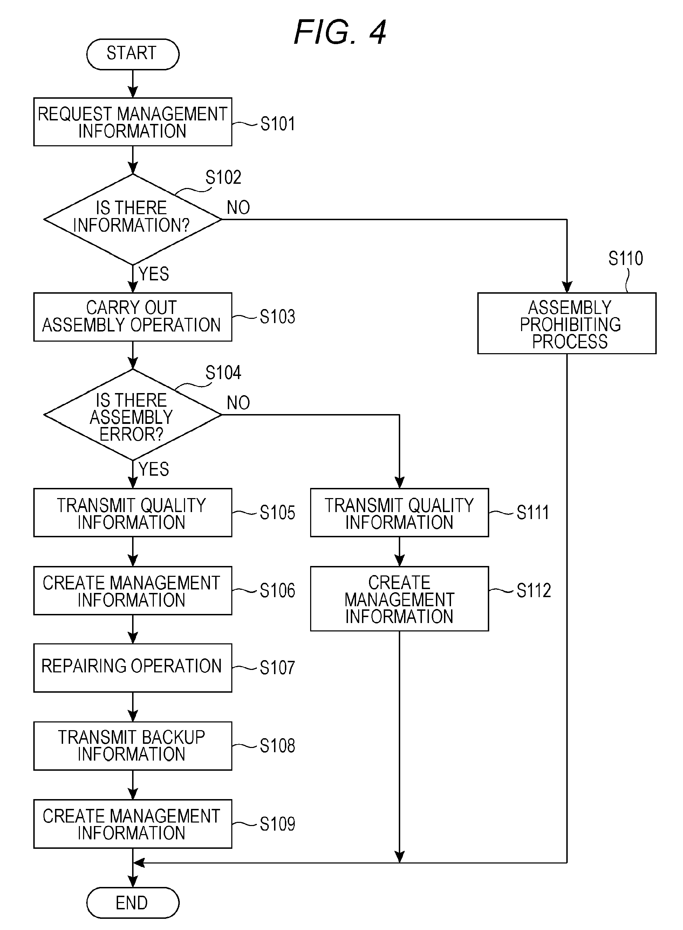

As illustrated in FIG. 4, before starting the assembly operation to the work W conveyed in the robot operation area R2, the management information acquisition unit 34 requests, from the management device 20, the management information for the work W to be subjected to the assembly operation (step S101). The assembly controller 33 then determines whether or not the acquired management information includes the quality information or the backup information for the operation performed prior to the assembly operation by the robot 30B (step S102). Specifically, the assembly controller 33 determines whether or not the acquired management information includes the quality information for the assembly operation performed by the robot 30A and the backup information for the repairing operation in the case where the worker X performs the repairing operation within the backup area B 1.

If the quality information and the backup information is not included in the acquired management information (step S102: NO), the assembly controller 33 applies a measure for prohibiting the process to the work W (assembly prohibiting measure of work W) (step S110). That is, the robot 30B does not carry out the assembly. For example, the assembly controller 33 transfers the work W to the next robot 30 without performing any assembly operation to the work W. Alternatively, the assembly controller 33 may alert and notify the worker X and/or other device that the assembly operation is difficult.

On the other hand, if the quality information or the backup information is included in the acquired management information (step S102: YES), the assembly controller 33 controls the arm and the like of the robot 30B to perform the assembly operation to the work W by the robot 30B (step S103). If the assembly operation is completed without any assembly error occurring during the assembly operation to the work W by the robot 30B (step S104: NO), the quality information transmission unit 32 transmits, to the management device 20, the quality information for the operation performed by the robot 30B (step S111). In response that the quality information acquisition unit 21 of the management device 20 receives the quality information, the management unit 23 associates the received quality information with the identification information of the work W to create the management information (step S112).

On the other hand, if there is an assembly error during the assembly operation of the work W by the robot 30B (step S104: YES), the quality information transmission unit 32 transmits, to the management device 20, the quality information for the operation performed by the robot 30B before the occurrence of the error (step S105). In response that the quality information acquisition unit 21 of the management device 20 receives the quality information, the management unit 23 associates the received quality information with the identification information of the work W to create the management information (step S106).

When there is an error during the assembly operation, the conveyance device 10 conveys, to the backup area B2, the work W at which the assembly error occurs. Here, because the error occurs during the assembly operation at the robot 30B, the work W is conveyed to the backup area B2. In the backup area B2, the worker X performs the repairing operation by using the nut runner 40B for the operation process at which the assembly error occurs (step S107).

Upon the completion of the repairing operation, the nut runner controller 41B of the nut runner 40B transmits, to the management device 20, the backup information for the operation performed during the repairing operation (step S108). In response that the quality information acquisition unit 21 of the management device 20 receives the backup information, the management unit 23 associates the received backup information with the identification information of the work W to create the management information (step S109). Thereby, for the process at which the error occurs in the assembly operation, the backup information for the repairing operation performed with the use of the nut runner 40 is associated with the identification information of the work W.

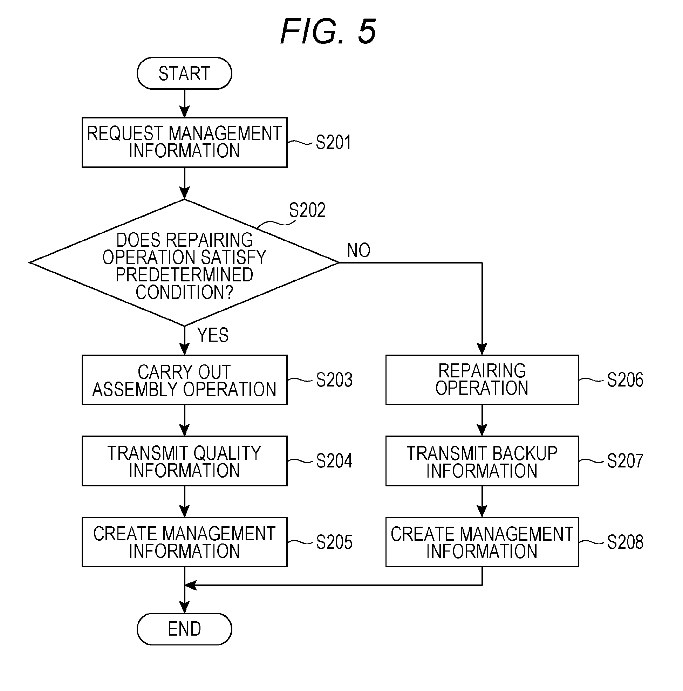

Next, described will be the procedure for resuming the assembly operation by the robot 30B after the repairing operation with the use of the nut runner 40B by the worker X. It is noted that, after the repairing operation by the worker X (step S107 of FIG. 4), the conveyance device 10 conveys, to the robot operation area R2, the work W to which the repairing operation is performed. As illustrated in FIG. 5, prior to the resumption of the assembly operation to the work W conveyed in the robot operation area R2 after the repairing operation, the management information acquisition unit 34 requests, from the management device 20, the management information for the work W to be subjected to the assembly operation (step S201).

Next, the assembly controller 33 refers to the acquired management information to determine whether or not the detail of the repairing operation made with the use of the nut runner 40B satisfies the predetermined condition (step S202). Specifically, this determination is performed based on the backup information included in the management information. If the operation detail satisfies the predetermined condition (step S202: YES), the assembly controller 33 controls the arm and so on of the robot 30B to perform the assembly operation to the work W by the robot 30B (step S203).

The quality information transmission unit 32 then transmits, to the management device 20, the quality information for the operation performed by the robot 30B (step S204). In response that the quality information acquisition unit 21 of the management device 20 receives the quality information, the management unit 23 associates the received quality information with the identification information of the work W to create the management information (step S205). It is noted that, when there is an assembly error in the assembly operation at the step S203, the process of step S105 to step S 109 of FIG. 4 may be performed.

On the other hand, if the detail of the repairing operation does not satisfy the predetermined condition (step S202: NO), the conveyance device 10 again conveys the work W which does not satisfy the condition to the backup area B2. In this case, because the operation detail of the repairing operation performed with the use of the nut runner 40B fails to satisfy the predetermined condition, the repairing operation by the worker X is again performed. Therefore, in the backup area B2, the worker X again performs the repairing operation by using the nut runner 40B for the operation process which is determined that the operation detail fails to satisfy the predetermined condition (step S206).

Upon the completion of the repairing operation, the nut runner controller 41B of the nut runner 40B transmits, to the management device 20, the backup information for the operation performed during the repairing operation (step S207). The quality information acquisition unit 21 of the management device 20 receives the backup information. The management unit 23 associates the received backup information with the identification information of the work W to create the management information (step S208). Thereby, the backup information not satisfying the predetermined condition is updated.

By the assembly process to the work W described with FIG. 4 and FIG. 5, the management information including the backup information is created by the backup information acquisition unit 22 and the management unit 23. This management information is created by that the quality information for all the operations performed by the robots 30 is associated with the backup information for all the operations performed with the use of the nut runners 40.

As described above, the manufacturing system 1 according to the present embodiment includes the nut runner 40 capable of transmitting the backup information indicating the detail of the repairing operation performed to the work W. Then, when the repairing operation performed with the use of the nut runner 40, the management device 20 acquires the backup information from the nut runner controller 41 of the nut runner 40. The management device 20 then associates the identification information of the work W with the backup information. Further, the management device 20 associates the identification information of the work W with the quality information indicating the detail of the assembly operation performed by the robot 30.

As a result, the identification information of the work W can be associated with the quality information indicating the operation detail performed by the robot 30 and the backup information indicating the operation detail performed with the use of the nut runner 40. Therefore, the backup information for the repairing operation performed by the worker X using the nut runner 40 is also automatically included in the management information. This allows for the proper management of the assembly state of the work W.

When the acquired management information includes the quality information or the backup information for the operation process performed prior to the current assembly operation process, the assembly controller 33 performs the assembly operation to the work W. The case where the management information for the operation process does not include the quality information and the backup information includes, for example, the case where there is some error in that operation process and the case where the worker X performs the operation without using the nut runner 40. In this case, because the management information for such operation process does not include the information indicating the quality, it will be difficult to properly manage the assembly state of the work W. Therefore, the assembly controller 33 performs the assembly operation to the work W only when the acquired management information includes the quality information or the backup information for the operation process performed before the current assembly operation. This allows for further proper management of the assembly state of the work W.

After the repairing operation with the use of the nut runner 40 by the worker X, the assembly operation is again performed by the robot 30. At this time, the assembly controller 33 refers to the management information. Then, when the immediately previous repairing operation performed with the use of the nut runner 40 satisfies the predetermined condition, the assembly controller 33 performs the assembly operation to the work W. This suppresses the situation that the subsequent assembly operation is carried out to the work W in which the repairing operation with the use of the nut runner 40 still fails to satisfy the predetermined condition. This makes it easier to find the error with respect to the repairing operation performed by the worker X. This allows the quality of the work W to be further enhanced.

The management unit 23 creates the management information by associating the quality information for the operation performed by the robot 30 and the backup information for the operation performed with the use of the nut runner 40 with the identification information of the work W. This allows for further proper management of the assembly state of the work W performed in the manufacturing system 1.

As set forth, although one embodiment of the present disclosure is described, the present disclosure is not limited to the above-described embodiment. For example, in the above-described embodiment, the nut runner 40 is used as a processing tool used in the repairing operation. In the present disclosure, however, for example, a coating applicator whose repairing operation detail is able to be electrically managed may be used instead of the nut runner 40 as the processing tool. When the coating applicator is used as the processing tool, the application amount of the grease or the sealing agent may be transmitted to the management device 20 as the backup information.

Further, in the above-described embodiment, the robot operation areas (R1, R2) and the backup areas (B1, B2) are alternately arranged as depicted in FIG. 1. This arrangement is not limited to what is depicted in FIG. 1.

It is noted that the manufacturing system of the present disclosure may be the following first to fourth manufacturing systems.

The first manufacturing system includes a plurality of processing devices configured to perform a process on a work and capable of outputting processing information including a processing detail performed to the work, a processing tool capable of outputting backup information including a processing detail performed to the work, and a management unit configured to create management information by associating the processing information and the backup information with identification information for identifying the work.

The second manufacturing system is a manufacturing system in the first manufacturing system, in which, when determining, based on the management information, that the processing information or the backup information exists for all the processes performed prior to the process performed by the processing device, the processing device performs a process to the work.

The third manufacturing system is a manufacturing system in the first or the second manufacturing system, in which, when determining, based on the management information, that the backup information for the process performed before the process performed by the processing device satisfies a predetermined condition, the processing device performs a process to the work.

The fourth manufacturing system is a manufacturing system in any one of the first to the third manufacturing systems, in which the management unit creates the management information by associating the identification information with the processing information for all the process performed by the processing device and the backup information for all the process performed with the use of the processing tool.

These manufacturing systems allows for the proper management of the assembly state of the work.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A manufacturing system (1) comprising:
a plurality of processing devices (30) capable of outputting processing information including a processing detail performed to a work (W);
a processing tool (40) capable of outputting backup information including a processing detail performed to the work; and
a management device (20) configured to create management information by associating the processing information and the backup information with identification information identifying the work.

2. The manufacturing system (1) according to claim 1, wherein, when the processing information or the backup information for a process performed before a process to be performed by the processing device is included in the management information, the processing device (30) performs a process to the work (W).

3. The manufacturing system (1) according to claim 1 or 2, wherein, when the processing device (30) determines, based on the management information, that the backup information for the process performed before the process performed by the processing device satisfies a predetermined condition, the processing device (30) performs a process to the work (W).

4. The manufacturing system (1) according to any one of claims 1 to 3, wherein the management device (20) creates the management information by associating processing information for all processes performed by the processing device (30) and backup information for all processes performed with a use of the processing tool (40) with the identification information.

5. The manufacturing system (1) according to any one of claims 1 to 4, wherein, when the processing information and the backup information for a process performed before a process performed by the processing device are not included in the management information, the processing device (30) performs a measure for prohibiting a process to the work (W).

6. The manufacturing system (1) according to claim 5, wherein, as the measure for prohibiting a process to the work (W), the processing device (30) transfers the work to a next processing device without carrying out a process to the work.

7. The manufacturing system (1) according to claim 5, wherein, as the measure for prohibiting a process to the work (W), the processing device (30) alerts that assembly operation to the work is difficult, without carrying out a process to the work.

8. The manufacturing system (1) according to any one of claims 1 to 7, wherein, when an error occurs in a process by the processing device (30), a process to the work (W) is performed by the processing tool (40).

9. The manufacturing system (1) according to any one of claims 1 to 8, wherein, when the processing device (30) determines that the backup information for a process to the work (W) by the processing tool (40) satisfies a predetermined condition, the processing device (30) performs a process to the work.

10. The manufacturing system (1) according to claim 9, wherein, when the processing device (30) determines that the backup information does not satisfy a predetermined condition, a process to the work (W) by the processing tool (40) is again performed.

11. The manufacturing system (1) according to any one of claims 1 to 10 comprising a conveyance device (10) configured to convey the work (W),
wherein the processing device (30) and the processing tool (40) are provided along an extending direction of the conveyance device.

12. The manufacturing system (1) according to any one of claims 1 to 11, wherein the processing tool (40) is a nut runner or a coating applicator.
